# EUROPÄISCHE PATENTSCHRIFT

(11) **EP 3 408 791 B1**
(45) Veröffentlichungstag und Bekanntmachung des Hinweises auf die Patenterteilung: **23.04.2025**
(21) Anmeldenummer: 17700828.1
(22) Anmeldetag: 19.01.2017
(51) Int. Cl.: G06V 10/147, G06V 40/12, G06V 40/13

(54) **AUTHENTIFIKATIONSVORRICHTUNG UND VERFAHREN ZUM AUTHENTIFIZIEREN EINER PERSON**
DEVICE AND METHOD FOR AUTHENTICATING A PERSON
DISPOSITIF ET PROCÉDÉ D'AUTHENTIFICATION D'UNE PERSONNE

(30) Priorität: 29.01.2016 DE 102016101613
(43) Veröffentlichungstag der Anmeldung: 05.12.2018
(73) Patentinhaber: Bundesdruckerei GmbH, 10969 Berlin (DE)
(72) Erfinder: WOLF, Andreas, 13158 Berlin (DE); KULIKOVSKA, Olga, 14165 Berlin (DE); KULIKOVSKI, Lazar, 14165 Berlin (DE); PAESCHKE, Manfred, 16348 Wandlitz (DE)
(74) Vertreter: Patentship Patentanwaltsgesellschaft mbH
(86) Internationale Anmeldenummer: PCT/EP2017/051042
(87) Internationale Veröffentlichungsnummer: WO 2017/129465

(56) Entgegenhaltungen:
- EP-A1- 2 083 398
- EP-A2- 1 434 162
- DE-A1- 102012 111 113
- DE-B3- 102004 041 397
- US-A1- 2009 153 297
- MALTONI D ET AL: "HANDBOOK OF FINGERPRINT RECOGNITION", 2003, SPRINGER VERLAG, NEW YORK, US, ISBN: 978-0-387-95431-8, article "LIVE-SCAN FINGERPRINT SENSING", pages: 59 - 74, XP002363594

## Beschreibung

Die vorliegende Erfindung betrifft das Gebiet der Authentifizierung von Personen.

Die Offenlegungsschrift EP 1 434 162 A2 beschreibt eine Speicherkarte, die eine Fingerabdruckleseeinheit aufweist.

Die Offenlegungsschrift EP 2 083 398 A1 beschreibt einen biometrischen Sensor.

Die Offenlegungsschrift US 2009/0153297 A1 beschreibt eine Smartkarte umfassend einen Fingerabdrucksensor.

Die Druckschrift "MALTONI D ET AL: "LIVE-SCAN FINGERPRINT SENSING"" beschreibt ein Glasprisma, wobei auf einer Basisfläche des Prismas ein Finger aufliegt. Die Basisfläche wird rückseitig mittels einer Lichtquelle beleuchtet.

Die Offenlegungsschrift DE 10 2012 111113 A1 beschreibt ein Sicherheitselement für ein Wert- und/oder Sicherheitsdokument.

Die Patentschrift DE 10 2004 041397 B3 beschreibt ein Aufbewahrungsmittel für zumindest eine kontaktlose Chipkarte.

Ein Authentifikationsdokument, beispielsweise ein Identifikationsdokument wie eine ID-Karte oder eine Smartcard, ist häufig einer Person zugeordnet und kann zum Authentifizieren der Person verwendet werden. Hierbei kann die Zuordnung des Authentifikationsdokuments zu der Person über Wissen, Besitz oder Sein erfolgen. Beispielsweise ist in dem Authentifikationsdokument ein biometrisches Referenzmerkmal der Person gespeichert, welches mittels einer Authentifikationsvorrichtung mit einem biometrischen Merkmal der Person verglichen wird. Die Authentifikationsvorrichtung kann eine externe Vorrichtung, welche das biometrische Referenzmerkmal aus dem Authentifikationsmerkmal ausliest, oder eine in dem Authentifikationsdokument integrierte Vorrichtung sein.

Ferner kann die Authentifikationsvorrichtung einen Sensor zum Erfassen des biometrischen Merkmals der Person aufweisen. Beispielsweise ist das biometrische Merkmal der Person ein Fingerabdruck und der Sensor ein Fingerabdrucksensor, insbesondere ein kapazitiver oder thermischer Halbleitersensor. Ferner kann der Halbleitersensor ein Zeilensensor sein, welcher auf der Kartenoberfläche verbaut ist. Derartige Halbleitersensoren geben ein Signal aus, welches häufig als ein Bild interpretiert wird. Aus dem Bild können zur Unterscheidung von Fingern verwendbare Elemente, beispielsweise Minutien, extrahiert werden.

Ist die Authentifikationsvorrichtung in dem Authentifikationsdokument integriert, so weist das Authentifikationsdokument aufgrund des verwendeten Halbleitersensors häufig eine vergleichsweise große Dicke auf. Beispielsweise wird hierbei das Authentifikationsdokument in einem Kartenformat nach dem Standard ISO 7810 ID-T gefertigt. Dies kann als unkomfortabel empfunden werden und die Ergonomie des Authentifikationsdokuments einschränken.

Es ist daher die Aufgabe der vorliegenden Erfindung, ein effizientes Konzept zum Authentifizieren einer Person mit einer Authentifikationsvorrichtung zu schaffen, welche kompakte geometrische Abmessung aufweist.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Gemäß einem ersten Aspekt betrifft die Erfindung eine Authentifikationsvorrichtung zum Authentifizieren einer Person gemäß Anspruch 1. Dadurch wird der Vorteil erreicht, dass eine effiziente Authentifizierung einer Person auf Basis der ersten und der zweiten Bildaufnahme des Hautbereichs erfolgen kann. Die zweite Position kann eine beliebige weitere Position sein. Auf diese Art und Weise kann eine Vielzahl einzelner Bilder an unterschiedlichen Positionen des Hautbereichs aufgenommen werden, welche anschließend zu einem Gesamtbild des Hautbereichs zusammengesetzt werden können. Ferner kann die Authentifikationsvorrichtung besonders kompakte geometrische Abmessungen aufweisen.

Durch die Authentifizierung der Person wird die Person authentifiziert. Die Authentifizierung der Person kann eine Identifizierung der Person und/oder eine Verifizierung der Identität der Person umfassen.

Die Authentifikationsvorrichtung kann in einem Authentifikationsdokument, wie einer ID-Karte oder einer Smartcard, integriert sein oder ein Authentifikationsdokument, wie eine ID-Karte oder eine Smartcard, bilden.

Das Authentifikationsdokument kann eines der folgenden Authentifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Authentifikationsdokument kann ferner einen elektronisch auslesbaren Schaltkreis, beispielsweise einen RFID-Chip umfassen. Das Authentifikationsdokument kann ein- oder mehrlagig bzw. papier- und/oder kunststoffbasiert sein. Das Authentifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Ferner kann die Authentifikationsvorrichtung ein Element eines Computers, eines Laptops, eines Mobiltelefons oder eines Smartphones sein. Beispielsweise ist die Authentifikationsvorrichtung ein Element eines Zugangskontrollsystems.

Die Beleuchtungseinrichtung kann eine Anzahl von Lichtquellen, insbesondere LEDs oder Laserdioden, umfassen. Die Lichtquellen können ausgebildet sein, die Auflage mit dem Beleuchtungslicht in einem vorbestimmten Wellenlängenbereich, insbesondere einem Wellenlängenbereich im sichtbaren oder im Nahinfrarot, zu beleuchten.

Die Bildkamera kann einen optischen Sensor, insbesondere einen Charge-Coupled Device (CCD) Detektor, umfassen, welcher ausgebildet ist, an dem Hautbereich reflektiertes, gebrochenes und/oder gestreutes Beleuchtungslicht zu erfassen.

Der Hautbereich der Person kann einem Finger der Person zugeordnet sein. Beispielsweise ist der Hautbereich ein Abschnitt einer Fingerbeere des Fingers der Person.

Die Auflage kann aus einem teiltransparenten Material, beispielsweise einem teiltransparenten Kunststoff wie Polycarbonat, geformt sein. Der Hautbereich, beispielsweise die Fingerbeere, ist erfindungsgemäß auf der Auflage in einer ersten Position und einer zweiten Position positionierbar und kann über die Auflage bewegbar sein. Die Person kann mit den Hautbereich beispielsweise über die Auflage streichen oder wischen.

Die erste Bildaufnahme und die zweite Bildaufnahme können hintereinander aufgenommen werden. Bei einer Streich- oder Wischbewegung des Hautbereichs über die Auflage können somit zwei unterschiedliche Teilbereiche des Hautbereichs hintereinander aufgenommen werden. Die erste Bildaufnahme und die zweite Bildaufnahme können somit jeweils unterschiedliche Teilbereiche des Hautbereichs abbilden. Da nur jeweils Teilbereiche des Hauptbereichs aufgenommen werden, können die Auflage, die Bildkamera und die Beleuchtungseinrichtung besonders kompakte geometrische Abmessungen aufweisen. Ferner können die erste Bildaufnahme und die zweite Bildaufnahme Streifenbilder sein.

Die Auflage ist an der Seitenfläche oder Kante des Kartenkörpers angeordnet, um ein Identifikationsdokument mit besonders kompakten geometrischen Abmessungen zu schaffen.

Gemäß einer Ausführungsform sind die Beleuchtungseinrichtung, die Bildkamera und der Prozessor in den Kartenkörper, welcher insbesondere ein Kunststoff-Kartenkörper ist, integriert. Dadurch wird der Vorteil erreicht, dass die Authentifikationsvorrichtung besonders einfach in ein Authentifikationsdokument integriert werden kann.

Gemäß einer Ausführungsform ist der Prozessor ausgebildet, auf der Basis der ersten Bildaufnahme und der zweiten Bildaufnahme eine gemeinsame Bildaufnahme des Hautbereichs zu erzeugen, und die Person auf der Basis der gemeinsamen Bildaufnahme zu authentifizieren. Dadurch wird der Vorteil erreicht, dass eine effiziente Identifizierung der Person erfolgen kann. Die erste Bildaufnahme und die zweite Bildaufnahme können jeweils unterschiedliche Teilbereiche des Hautbereichs abbilden. Der Prozessor kann ausgebildet sein, die Bildaufnahmen der Teilbereiche zu der gemeinsamen Bildaufnahme zusammenzusetzen.

Die gemeinsame Bildaufnahme kann den kompletten Hautbereich oder einen größeren Abschnitt des Hautbereichs als die einzelnen Bildaufnahmen abbilden. Die gemeinsame Bildaufnahme kann den Hautbereich einer Fingerspitze oder einer Fingerbeere der Person abbilden.

Gemäß einer Ausführungsform ist der Prozessor ausgebildet, in der gemeinsamen Bildaufnahme eine Oberflächenstruktur des Hautbereichs, insbesondere Minutien, zu erfassen, und die Person auf der Basis der Oberflächenstruktur zu authentifizieren. Dadurch wird der Vorteil erreicht, dass eine effiziente Identifizierung der Person auf der Basis der gemeinsamen Bildaufnahme erfolgen kann.

Gemäß einer Ausführungsform umfasst die Bildkamera einen Zeilensensor, einen Linsen-Array-Detektor oder einen CCD-Detektor. Dadurch wird der Vorteil erreicht, dass die Bildkamera besonders kompakte geometrische Abmessungen aufweisen kann.

Die Bildkamera kann einen Bildsensor, insbesondere einen thermischen oder einen kapazitiven Bildsensor umfassen. Der Bildsensor kann für Bildaufnahmen im sichtbaren Spektrum oder im Nahinfrarot ausgebildet sein. Ferner kann der Bildsensor ein Halbleitersensor sein.

Die Authentifikationsvorrichtung umfasst einen Spiegel, welcher in der Authentifikationsvorrichtung angeordnet ist, um an dem Hautbereich reflektiertes Beleuchtungslicht in Richtung der Bildkamera zu reflektieren. Dadurch wird der Vorteil erreicht, dass eine effiziente Bildaufnahme des Hautbereichs durch die Bildkamera erfolgen kann. Der Spiegel kann ferner ausgebildet sein, an dem Hautbereich gebrochenes und/oder gestreutes Beleuchtungslicht in Richtung der Bildkamera zu reflektieren.

Gemäß einer Ausführungsform umfasst die Authentifikationsvorrichtung eine Linsenanordnung, welche zwischen der Auflage und der Bildkamera angeordnet ist, um die Bildkamera auf die Auflage zu fokussieren. Dadurch wird der Vorteil erreicht, dass eine effiziente Bildaufnahme des Hautbereichs durch die Bildkamera erfolgen kann.

Die Linsenanordnung kann eine Linse umfassen, welche angeordnet ist, an dem Hautbereich reflektiertes Beleuchtungslicht auf die Bildkamera zu fokussieren. Der Abstand zwischen der Linse und der Bildkamera kann der Brennweite der Bildkamera entsprechen. Die Linsenanordnung kann ferner ein Objektiv umfassen.

Gemäß einer Ausführungsform ist die Auflage aus einem teiltransparenten Kunststoff, insbesondere Polycarbonat, geformt. Die Auflage kann eine glatte oder eine geriffelte Oberfläche aufweisen. Die Auflage kann mit einer Antireflexbeschichtung beschichtet sein.

Gemäß einer Ausführungsform umfasst die Beleuchtungseinrichtung eine Anzahl von Lichtquellen, insbesondere Nahinfrarot-LEDs. Dadurch wird der Vorteil erreicht, dass eine effiziente Belichtung der Auflage bzw. des Hautbereichs durch die Beleuchtungseinrichtung erfolgen kann. Die Lichtquellen können in einem eindimensionalen oder einem zweidimensionalen Array angeordnet sein.

Die Authentifikationsvorrichtung umfasst eine Lichtleiterstruktur, welche ausgebildet ist, an dem Hautbereich reflektiertes Beleuchtungslicht in Richtung der Bildkamera zu leiten. Dadurch wird der Vorteil erreicht, dass eine effiziente Bildaufnahme des Hautbereichs durch die Bildkamera erfolgen kann.

Die Lichtleiterstruktur kann ferner ausgebildet sein, das Beleuchtungslicht von der Beleuchtungseinrichtung in Richtung der Auflage zu leiten. Ferner kann die Lichtleiterstruktur ausgebildet sein, das an dem Hautbereich reflektierte Beleuchtungslicht in Richtung des Spiegels und nach Reflexion des Beleuchtungslichts an dem Spiegel in Richtung der Bildkamera zu leiten.

Gemäß einer Ausführungsform ist die Lichtleiterstruktur ausgebildet, das reflektierte Beleuchtungslicht mittels Totalreflektion, insbesondere mittels gestörter Totalreflexion, in Richtung der Bildkamera zu leiten. Dadurch wird der Vorteil erreicht, dass ein besonders effizientes Leiten des an dem Hautbereich reflektierten Beleuchtungslichts durch die Lichtleiterstruktur erfolgen kann.

Die Lichtleiterstruktur ist ein Hohlraum, insbesondere ein keilförmiger Hohlraum, in dem Kartenkörper. Der Hohlraum kann sich in einer Längsrichtung in dem Kartenkörper erstrecken. Die Beleuchtungseinrichtung, die Auflage und die Bildkamera können an Seitenflächen bzw. Kanten des Hohlraums angeordnet sein. Ferner ist der Spiegel eine verspiegelte Kante des Hohlraums.

Gemäß einer Ausführungsform ist der Hohlraum mit Luft oder mit einem teiltransparenten Kunststoff, insbesondere Polycarbonat, gefüllt. Dadurch wird der Vorteil erreicht, dass ein besonders effizientes Leiten des an dem Hautbereich reflektierten Beleuchtungslichts durch die Lichtleiterstruktur erfolgen kann.

Gemäß einem zweiten Aspekt betrifft die Erfindung ein Verfahren zum Authentifizieren einer Person gemäß Anspruch 12. Das Verfahren wird mit einer Authentifikationsvorrichtung durchgeführt, welche eine Karten-Authentifikationsvorrichtung ist und einen Kartenkörper aufweist. Die Auflage ist an einer Seitenfläche oder einer Kante des Kartenkörpers angeordnet.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: eine schematische Darstellung einer Authentifikationsvorrichtung zum Authentifizieren einer Person;
- Fig. 2: eine schematische Darstellung einer Authentifikationsvorrichtung, welche als Karten-Authentifikationsvorrichtung ausgebildet ist;
- Fig. 3: eine schematische Darstellung einer Authentifikationsvorrichtung mit einer Linsenanordnung; und
- Fig. 4: ein Flussdiagramm eines Verfahrens zum Authentifizieren einer Person.

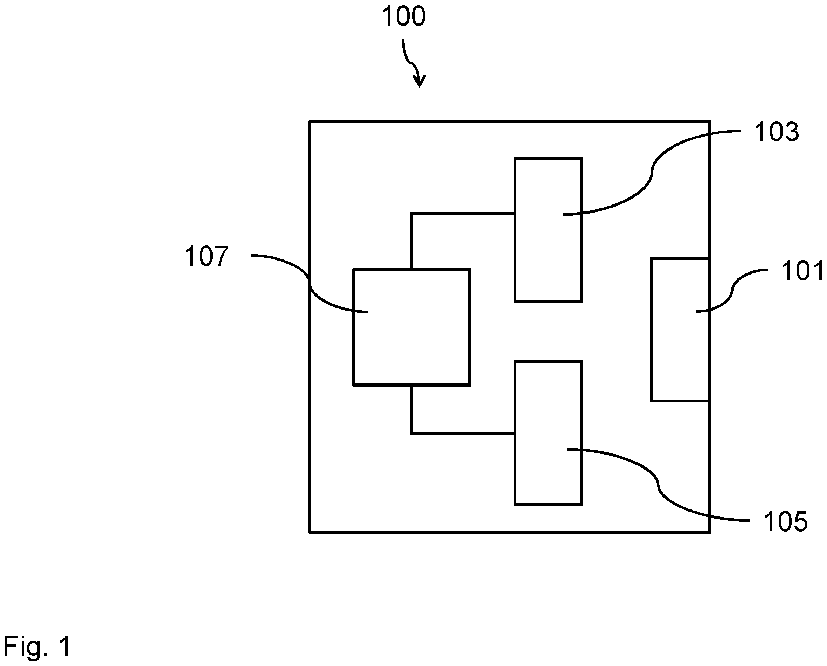

Fig. 1 zeigt eine schematische Darstellung einer Authentifikationsvorrichtung 100 zum Authentifizieren einer Person gemäß einer Ausführungsform.

Die Authentifikationsvorrichtung 100 umfasst eine Auflage 101 zum Auflegen eines Hautbereichs der Person, wobei der Hautbereich auf der Auflage 101 in einer ersten Position und einer zweiten Position positionierbar ist; eine Beleuchtungseinrichtung 103, welche ausgebildet ist, die Auflage 101 rückseitig mit einem Beleuchtungslicht zu beleuchten, um den Hautbereich in der ersten Position und in der zweiten Position zu beleuchten, einer Bildkamera 105 zum Aufnehmen einer ersten Bildaufnahme des Hautbereichs in der ersten Position auf der Auflage 101 und einer zweiten Bildaufnahme des Hautbereichs in der zweiten Position auf der Auflage 101, und einem Prozessor 107, welcher ausgebildet ist, die Person auf der Basis der ersten Bildaufnahme und der zweiten Bildaufnahme zu authentifizieren.

Durch die Authentifizierung der Person wird die Person authentifiziert. Die Authentifizierung der Person kann eine Identifizierung der Person und/oder eine Verifizierung der Identität der Person umfassen.

Die Authentifikationsvorrichtung 100 kann in einem Authentifikationsdokument, wie einer ID-Karte oder einer Smartcard, integriert sein oder ein Authentifikationsdokument, wie eine ID-Karte oder eine Smartcard, bilden.

Das Authentifikationsdokument kann eines der folgenden Authentifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Authentifikationsdokument kann ferner einen elektronisch auslesbaren Schaltkreis, beispielsweise einen RFID-Chip umfassen. Das Authentifikationsdokument kann ein- oder mehrlagig bzw. papier- und/oder kunststoffbasiert sein. Das Authentifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Ferner kann die Authentifikationsvorrichtung 100 ein Element eines Computers, eines Laptops, eines Mobiltelefons oder eines Smartphones sein. Beispielsweise ist die Authentifikationsvorrichtung 100 ein Element eines Zugangskontrollsystems.

Die Beleuchtungseinrichtung 103 kann eine Anzahl von Lichtquellen, insbesondere LEDs oder Laserdioden, umfassen. Die Lichtquellen können ausgebildet sein, die Auflage 101 mit dem Beleuchtungslicht in einem vorbestimmten Wellenlängenbereich, insbesondere einem Wellenlängenbereich im sichtbaren Spektrum oder im Nahinfrarot, zu beleuchten.

Der Bildkamera 105 kann einen optischen Sensor, insbesondere einen Charge-Coupled Device (CCD) Detektor, umfassen, welcher ausgebildet ist, an dem Hautbereich reflektiertes, gebrochenes und/oder gestreutes Beleuchtungslicht zu erfassen.

Der Hautbereich der Person kann einem Finger der Person zugeordnet sein. Beispielsweise ist der Hautbereich ein Abschnitt einer Fingerbeere des Fingers der Person.

Die Auflage 101 kann aus einem teiltransparenten Material, beispielsweise einem teiltransparenten Kunststoff wie Polycarbonat, geformt sein. Der Hautbereich, beispielsweise die Fingerbeere, kann über die Auflage 101 bewegbar sein. Die Person kann mit den Hautbereich beispielsweise über die Auflage 101 streichen oder wischen.

Die erste Bildaufnahme und die zweite Bildaufnahme können hintereinander aufgenommen werden. Bei einer Streich- oder Wischbewegung des Hautbereichs über die Auflage 101 können somit zwei unterschiedliche Teilbereiche des Hautbereiches hintereinander aufgenommen werden. Die erste Bildaufnahme und die zweite Bildaufnahme können somit jeweils unterschiedliche Teilbereiche des Hautbereichs abbilden. Da nur jeweils Teilbereiche des Hauptbereichs aufgenommen werden, können die Auflage 101, die Bildkamera 105 und die Beleuchtungseinrichtung 103 besonders kompakte geometrische Abmessungen aufweisen. Ferner können die erste Bildaufnahme und die zweite Bildaufnahme Streifenbilder sein.

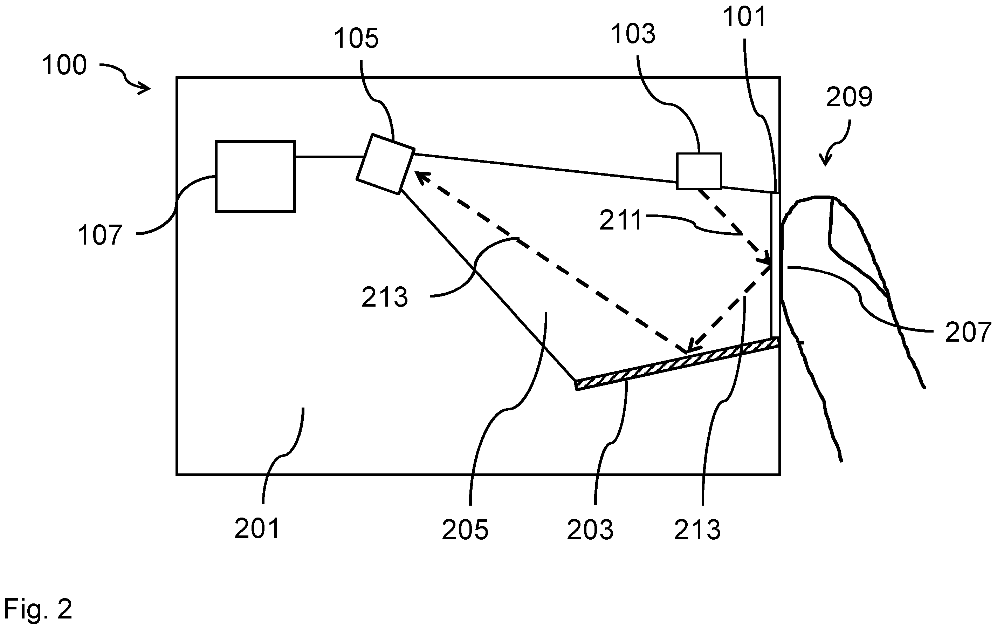

Fig. 2 zeigt eine schematische Darstellung der Authentifikationsvorrichtung 100, welche als Karten-Authentifikationsvorrichtung ausgebildet ist, gemäß einer Ausführungsform.

Die Authentifikationsvorrichtung 100 in Fig. 2 umfasst einen Kartenkörper 201. Der Kartenkörper 201 kann als Kunststoff-Kartenkörper, beispielsweise aus Polycarbonat, geformt sein.

In den Kartenkörper 201 in Fig. 2 sind die Auflage 101, die Beleuchtungseinrichtung 103, die Bildkamera 105 und der Prozessor 107 integriert. Die Auflage 101 ist an einer Seitenfläche bzw. Kante des Kartenkörpers 201 angeordnet.

Fig. 2 zeigt ferner den Hautbereich 207 eines Fingers 209, welcher zur Bildaufnahme über die Auflage 101 auf der Seitenfläche bzw. Kante des Kartenkörpers 201 bewegt werden kann. Die Bewegung kann dabei in einer Wischbewegung quer zur Kante oder entlang der Kante des Kartenkörpers 201 erfolgen.

Bei der Bewegung des Hautbereichs 207 über die Auflage 101 können hintereinander die erste Bildaufnahme und die zweite Bildaufnahme aufgenommen werden. Auf diese Art und Weise können jeweils unterschiedliche Teilbereiche des Hautbereichs 207, welche sich im Moment der ersten bzw. zweiten Bildaufnahme in einem Erfassungsbereich der Bildkamera 105 befinden, aufgenommen werden.

Der Prozessor 107 kann ausgebildet sein, auf der Basis der ersten Bildaufnahme und der zweiten Bildaufnahme eine gemeinsame Bildaufnahme des Hautbereichs 207 zu erzeugen und die Person auf der Basis der gemeinsamen Bildaufnahme zu authentifizieren.

Gemäß einer Ausführungsform sind die erste Bildaufnahme und die zweite Bildaufnahme jeweils Streifenbilder, welche aneinandergrenzende Teilbereiche des Hautbereichs 207 abbilden. Der Prozessor 107 kann ausgebildet sein, die erste Bildaufnahme und die zweite Bildaufnahme zu der gemeinsamen Bildaufnahme zusammenzuführen. Die gemeinsame Bildaufnahme kann den kompletten Hautbereich 207 oder einen größeren Abschnitt des Hautbereichs 207 als die einzelnen Bildaufnahmen abbilden.

Gemäß einer Ausführungsform ist der Prozessor 107 ausgebildet, in der gemeinsamen Bildaufnahme eine Oberflächenstruktur des Hautbereichs 207, insbesondere Minutien, zu erfassen, und die Person auf der Basis der Oberflächenstruktur zu authentifizieren.

Gemäß einer Ausführungsform umfasst die Beleuchtungseinrichtung 103 eine Anzahl von Lichtquellen, insbesondere LEDs. Die Lichtquellen können in einem eindimensionalen oder einem zweidimensionalen Array angeordnet sein. Die Beleuchtungseinrichtung kann ausgebildet sein, das Beleuchtungslicht 211 in Richtung der Auflage 101 bzw. des Hautbereichs 207 auszustrahlen.

Die Authentifikationsvorrichtung 100 in Fig. 2 umfasst ferner eine Lichtleiterstruktur 205. Die Lichtleiterstruktur 205 ist ausgebildet, das an dem Hautbereich 207 reflektierte Beleuchtungslicht 213 in Richtung der Bildkamera 105 zu leiten.

Die Lichtleiterstruktur 205 ist als Hohlraum 205 in dem Kartenkörper 201 geformt. Der Hohlraum 205 kann sich in einer Längsrichtung in dem Kartenkörper 201 erstrecken. Ferner kann der Hohlraum 205 keilförmig sein.

Gemäß einer Ausführungsform sind die Beleuchtungseinrichtung 103, die Auflage 101 und die Bildkamera 105 jeweils an Seitenflächen, insbesondere unterschiedlichen Seitenflächen, bzw. Kanten des Hohlraums 205 angeordnet. Die Auflage 101 kann an einer Außenkante des Hohlraums 205 angeordnet sein. Die Auflage 101 kann ferner auf einer Ober- oder Unterseite des Kartenkörpers 201 angeordnet sein.

Gemäß einer Ausführungsform umfasst die Beleuchtungseinrichtung 103 einen Lightguide bzw. ein Lichtleiteelement, wie in der Druckschrift DE 10 2014 205 363 A1 offenbart, zur homogenen Beleuchtung der Auflage 101 bzw. des Hautbereichs 207.

Gemäß einer Ausführungsform ist der Hohlraum 205 mit Luft oder mit einem teiltransparenten Kunststoff, insbesondere Polycarbonat, gefüllt. Durch die Füllung des Hohlraums 205 mit teiltransparentem Kunststoff kann eine mechanische Festigkeit der Authentifikationsvorrichtung 100 erhöht werden.

Ferner kann die Füllung des Hohlraums 205 derart ausgebildet sein, dass der Hohlraum 205 von der Bildkamera 105 bzw. einem Zeilensensor der Bildkamera 105 als Objektiv verwendet werden kann, um den Hautbereich 207 scharf abzubilden.

Gemäß einer weiteren Ausführungsform ist die Lichtleiterstruktur 205 ausgebildet, das Beleuchtungslicht 211, 213 mittels Totalreflektion, insbesondere mittels gestörter Totalreflexion, zu leiten.

Die Authentifikationsvorrichtung 100 in Fig. 2 umfasst ferner einen Spiegel 203. Der Spiegel 203 ist in der Authentifikationsvorrichtung 100 angeordnet, um an dem Hautbereich 207 reflektiertes Beleuchtungslicht 213 in Richtung der Bildkamera 105 zu reflektieren.

Der Spiegel 203 kann ferner ausgebildet sein, an dem Hautbereich 207 gebrochenes und/oder gestreutes Beleuchtungslicht 213 in Richtung der Bildkamera 105 zu reflektieren.

Der Spiegel 203 ist eine verspiegelte Kante des Hohlraums 205 in dem Kartenkörper 201.

Gemäß einer Ausführungsform ist die Lichtleiterstruktur 205 ausgebildet, das Beleuchtungslicht 211 von der Beleuchtungseinrichtung 103 in Richtung der Auflage 101 zu leiten. Ferner kann die Lichtleiterstruktur 205 ausgebildet sein, das an dem Hautbereich 207 reflektierte Beleuchtungslicht 213 in Richtung des Spiegels 203 und nach Reflexion des reflektierten Beleuchtungslichts 213 an dem Spiegel 203 weiter in Richtung der Bildkamera 105 zu leiten.

Gemäß einer Ausführungsform ist die Auflage 101 aus einem teiltransparenten Material, beispielsweise einem teiltransparenten Kunststoff wie Polycarbonat, geformt. Die Auflage 101 kann eine glatte oder eine geriffelte Oberfläche aufweisen. Die Auflage 101 kann ferner mit einer Antireflexbeschichtung beschichtet sein.

Gemäß einer Ausführungsform umfasst die Bildkamera 105 einen Zeilensensor, einen Linsen-Array-Detektor oder einen CCD-Detektor. Die Bildkamera 105 kann ferner einen Bildsensor, insbesondere einen thermischen oder einen kapazitiven Bildsensor umfassen.

Der Bildsensor kann für Bildaufnahmen im sichtbaren Spektrum oder im Nahinfrarot ausgebildet sein. Ferner kann der Bildsensor ein Halbleitersensor sein.

Die Bildkamera 105 kann einen Zeilensensor mit einer Auflösung von 200x8 Pixel in Längs- bzw. Querrichtung des Zeilensensors umfassen. Ferner kann die Bauhöhe des Zeilensensors weniger als einen halben Millimeter betragen. Die minimale Bauhöhe des Zeilensensors kann durch die Zahl der Pixel in Querrichtung beschränkt sein.

Die Auflösung des Zeilensensors kann durch eine Erhöhung der Pixelzahl, beispielsweise auf mehr als 8 Pixel in Querrichtung, erhöht werden, um die Bildpräzision und/oder die Arbeitsgeschwindigkeit der Bildkamera 105 zu erhöhen. Auf diese Art und Weise kann die Auflösung des Zeilensensors beispielsweise von 500 dpi auf 1000 dpi erhöht werden.

Gemäß einer Ausführungsform sind die Bildkamera 105, die Beleuchtungseinrichtung 103 und die lichtleitende Struktur 205 in einer Erstreckungsebene des Kartenkörpers 100 angeordnet, um einen möglichst flache Karten-Authentifikationsvorrichtung zu schaffen.

Gemäß einer Ausführungsform ist die Karten-Authentifikationsvorrichtung in einem Kartenformat nach dem Standard ISO 7810 ID-T gefertigt.

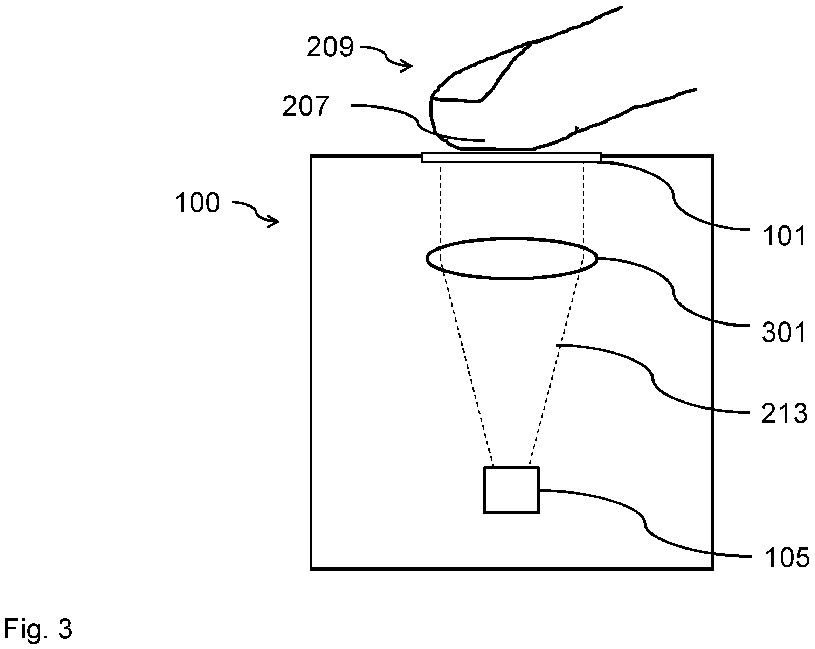

Fig. 3 zeigt eine schematische Darstellung der Authentifikationsvorrichtung 100 mit einer Linsenanordnung 301 gemäß einer Ausführungsform. Die Linsenanordnung 301 ist in Fig. 3 zwischen der Auflage 101 und der Bildkamera 105 angeordnet.

Gemäß einer Ausführungsform fokussiert die Linsenanordnung 301 die Bildkamera 105 auf die Auflage 101. Der Abstand zwischen der Linse und der Bildkamera 105 kann der Brennweite der Bildkamera 105 entsprechen. Die Linsenanordnung 301 kann ferner ein Objektiv umfassen.

Gemäß einer Ausführungsform kann die Linsenanordnung 301, wie in Fig. 3 gezeigt, eine Linse umfassen, welche angeordnet ist, an dem Hautbereich 207 reflektiertes Beleuchtungslicht 213 auf die Bildkamera 105 zu fokussieren.

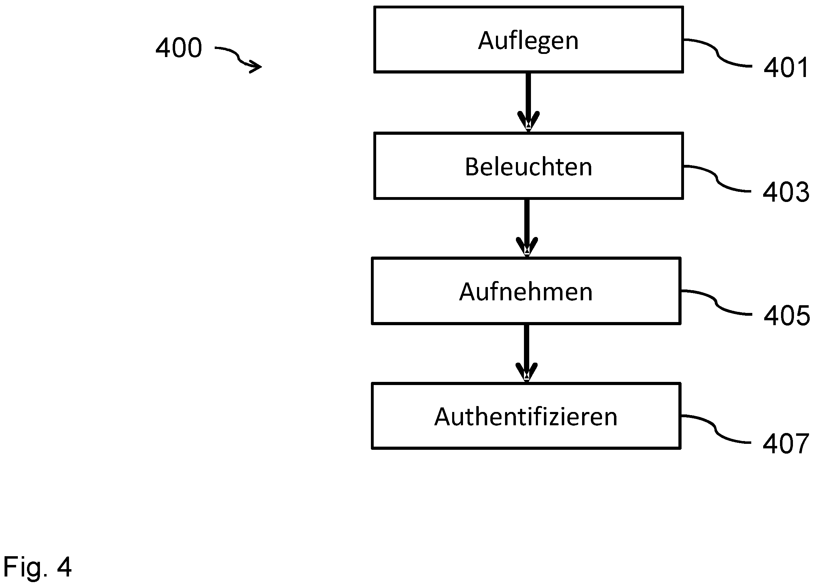

Fig. 4 zeigt ein Flussdiagramm eines Verfahrens 400 zum Authentifizieren der Person.

Das Verfahrens 400 zum Authentifizieren der Person umfasst ein Auflegen 401 des Hautbereichs 207 der Person auf die Auflage 101, wobei der Hautbereich 207 auf der Auflage 101 in einer ersten Position und einer zweiten Position positionierbar ist, ein rückseitiges Beleuchten 403 der Auflage 101, um den Hautbereich 207 in der ersten Position und in der zweiten Position zu beleuchten, ein Aufnehmen 405 einer ersten Bildaufnahme des Hautbereichs 207 in der ersten Position auf der Auflage 101 und einer zweiten Bildaufnahme des Hautbereichs 207 in der zweiten Position auf der Auflage 101, und ein Authentifizieren 407 der Person auf der Basis der ersten Bildaufnahme und der zweiten Bildaufnahme.

### Bezugszeichenliste

- 100: Authentifikationsvorrichtung
- 101: Auflage
- 103: Beleuchtungseinrichtung
- 105: Bildkamera
- 107: Prozessor

- 201: Kartenkörper
- 203: Spiegel
- 205: Lichtleiterstruktur
- 207: Hautbereich
- 209: Finger
- 211: Beleuchtungslicht
- 213: reflektiertes Beleuchtungslicht

- 301: Linsenanordnung

- 400: Verfahren
- 401: Auflegen
- 403: Beleuchten
- 405: Aufnehmen
- 407: Authentifizieren

## Patentansprüche

1. Authentifikationsvorrichtung (100) zum Authentifizieren einer Person, wobei die Authentifikationsvorrichtung (100) eine Karten-Authentifikationsvorrichtung ist und einen Kartenkörper (201) aufweist, wobei der Kartenkörper (201) eine Oberseite, eine Seitenfläche und eine Unterseite aufweist, mit:
einer Auflage (101) zum Auflegen eines Hautbereichs (207) der Person, wobei der Hautbereich (207) auf der Auflage (101) in einer ersten Position und einer zweiten Position positionierbar ist;
einer Beleuchtungseinrichtung (103), welche ausgebildet ist, die Auflage (101) rückseitig mit einem Beleuchtungslicht (211) zu beleuchten, um den Hautbereich (207) in der ersten Position und in der zweiten Position zu beleuchten;
einer Bildkamera (105) zum Aufnehmen einer ersten Bildaufnahme des Hautbereichs (207) in der ersten Position auf der Auflage (101) und einer zweiten Bildaufnahme des Hautbereichs (207) in der zweiten Position auf der Auflage (101); und
einem Prozessor (107), welcher ausgebildet ist, die Person auf der Basis der ersten Bildaufnahme und der zweiten Bildaufnahme zu authentifizieren;
wobei die Auflage (101) an der Seitenfläche oder einer Kante des Kartenkörpers (201) angeordnet ist,
wobei die Authentifikationsvorrichtung (100) eine Lichtleiterstruktur (205) umfasst, welche ausgebildet ist, an dem Hautbereich (207) reflektiertes Beleuchtungslicht (213) in Richtung der Bildkamera (105) zu leiten, wobei die Lichtleiterstruktur (205) ein Hohlraum in dem Kartenkörper (201) ist,
**dadurch gekennzeichnet, dass**
die Authentifikationsvorrichtung (100) einen Spiegel (203) umfasst, welcher in der Authentifikationsvorrichtung (100) angeordnet ist, um an dem Hautbereich (207) reflektiertes Beleuchtungslicht (213) in Richtung der Bildkamera (105) zu reflektieren,
wobei der Spiegel (203) eine verspiegelte Kante des Hohlraums ist.

2. Authentifikationsvorrichtung (100) nach Anspruch 1, wobei die Beleuchtungseinrichtung (103), die Bildkamera (105) und der Prozessor (107) in den Kartenkörper, welcher insbesondere ein Kunststoff-Kartenkörper ist, integriert sind.

3. Authentifikationsvorrichtung (100) nach Anspruch 1 oder 2, wobei der Prozessor (107) ausgebildet ist, auf der Basis der ersten Bildaufnahme und der zweiten Bildaufnahme eine gemeinsame Bildaufnahme des Hautbereichs (207) zu erzeugen, und die Person auf der Basis der gemeinsamen Bildaufnahme zu authentifizieren.

4. Authentifikationsvorrichtung (100) nach Anspruch 3, wobei der Prozessor (107) ausgebildet ist, in der gemeinsamen Bildaufnahme eine Oberflächenstruktur des Hautbereichs (207), insbesondere Minutien, zu erfassen, und die Person auf der Basis der Oberflächenstruktur zu authentifizieren.

5. Authentifikationsvorrichtung (100) nach einem der vorstehenden Ansprüche, wobei die Bildkamera (105) einen Zeilensensor, einen Linsen-Array-Detektor oder einen CCD-Detektor umfasst.

6. Authentifikationsvorrichtung (100) nach einem der vorstehenden Ansprüche, wobei die Authentifikationsvorrichtung (100) eine Linsenanordnung (301) umfasst, welche zwischen der Auflage (101) und der Bildkamera (105) angeordnet ist, um die Bildkamera (105) auf die Auflage (101) zu fokussieren.

7. Authentifikationsvorrichtung (100) nach einem der vorstehenden Ansprüche, wobei die Auflage (101) aus einem teiltransparenten Kunststoff, insbesondere Polycarbonat, geformt ist.

8. Authentifikationsvorrichtung (100) nach einem der vorstehenden Ansprüche, wobei die Beleuchtungseinrichtung (103) eine Anzahl von Lichtquellen, insbesondere Nahinfrarot-LEDs, umfasst.

9. Authentifikationsvorrichtung (100) nach einem der vorstehenden Ansprüche, wobei die Lichtleiterstruktur (205) ausgebildet ist, das reflektierte Beleuchtungslicht (213) mittels gestörter Totalreflektion in Richtung der Bildkamera (105) zu leiten.

10. Authentifikationsvorrichtung (100) nach einem der vorstehenden Ansprüche, wobei der Hohlraum (205) ein keilförmiger Hohlraum (205) ist.

11. Authentifikationsvorrichtung (100) nach einem der vorstehenden Ansprüche, wobei der Hohlraum (205) mit Luft oder mit einem teiltransparenten Kunststoff, insbesondere Polycarbonat, gefüllt ist.

12. Verfahren (400) zum Authentifizieren einer Person, mit:
Auflegen (401) eines Hautbereichs (207) der Person auf eine Auflage (101), wobei der Hautbereich (207) auf der Auflage (101) in einer ersten Position und einer zweiten Position positionierbar ist;
rückseitiges Beleuchten (403) der Auflage (101), um den Hautbereich (207) in der ersten Position und in der zweiten Position zu beleuchten;
Aufnehmen (405) einer ersten Bildaufnahme des Hautbereichs (207) in der ersten Position auf der Auflage (101) und einer zweiten Bildaufnahme des Hautbereichs (207) in der zweiten Position auf der Auflage (101); und
Authentifizieren (407) der Person auf der Basis der ersten Bildaufnahme und der zweiten Bildaufnahme,
wobei das Verfahren mit einer Authentifikationsvorrichtung nach einem der vorstehenden Ansprüche durchgeführt wird.

## Claims

1. Authentication device (100) for authenticating a person, wherein the authentication device (100) is a card authentication device and comprises a card body (201), wherein the card body (201) has a top surface, a side surface and a bottom surface, the authentication device (100) comprising:
a support (101) for placing a skin region (207) of the person, wherein the skin region (207) is positionable on the support (101) in a first position and a second position;
an illumination device (103), which is configured to illuminate the support (101) with an illumination light (211) at a back side in order to illuminate the skin region (207) in the first position and in the second position;
an image camera (105) for capturing a first image capture of the skin region (207) in the first position on the support (101) and a second image capture of the skin region (207) in the second position on the support (101); and
a processor (107), which is configured to authenticate the person based on the first image capture and the second image capture;
wherein the support (101) is arranged on the side surface or an edge of the card body (201),
wherein the authentication device (100) comprises a light guide structure (205), which is configured to guide illumination light (213) reflected at the skin region (207) towards the image camera (105), wherein the light guide structure (205) is a cavity in the card body (201),
**characterized in that**
the authentication device (100) comprises a mirror (203), which is arranged in the authentication device (100) in order to reflect illumination light (213) reflected at the skin region (207) towards the image camera (105),
wherein the mirror (203) is a mirrored edge of the cavity.

2. Authentication device (100) according to claim 1, wherein the illumination device (103), the image camera (105) and the processor (107) are integrated into the card body, which is in particular a plastic card body.

3. Authentication device (100) according to claim 1 or 2, wherein the processor (107) is configured to generate a joint image capture of the skin region (207) on the basis of the first image capture and the second image capture, and to authenticate the person on the basis of the joint image capture.

4. Authentication device (100) according to claim 3, wherein the processor (107) is configured to detect a surface structure of the skin region (207), in particular minutiae, in the joint image capture and to authenticate the person on the basis of the surface structure.

5. Authentication device (100) according to one of the preceding claims, wherein the image camera (105) comprises a line sensor, a lens array detector or a CCD detector.

6. Authentication device (100) according to one of the preceding claims, wherein the authentication device (100) comprises a lens arrangement (301), which is arranged between the support (101) and the image camera (105) in order to focus the image camera (105) on the support (101).

7. Authentication device (100) according to one of the preceding claims, wherein the support (101) is formed from a partially transparent plastic, in particular polycarbonate.

8. Authentication device (100) according to one of the preceding claims, wherein the illumination device (103) comprises a number of light sources, in particular near-infrared LEDs.

9. Authentication device (100) according to one of the preceding claims, wherein the light guide structure (205) is configured to guide the reflected illumination light (213) by means of disturbed total reflection in the direction of the image camera (105).

10. Authentication device (100) according to one of the preceding claims, wherein the cavity (205) is a wedge-shaped cavity (205).

11. Authentication device (100) according to one of the preceding claims, wherein the cavity (205) is filled with air or with a partially transparent plastic, in particular polycarbonate.

12. Method (400) for authenticating a person, comprising:
placing (401) a skin region (207) of the person on a support (101), wherein the skin region (207) is positionable on the support (101) in a first position and a second position;
illuminating (403) the support (101) at a back side in order to illuminate the skin region (207) in the first position and in the second position;
capturing (405) a first image capture of the skin region (207) in the first position on the support (101) and a second image capture of the skin region (207) in the second position on the support (101); and
authenticating (407) the person based on the first image capture and the second image capture,
wherein the method is carried out with an authentication device according to one of the preceding claims.

## Revendications

1. Dispositif d'authentification (100) pour authentifier une personne, le dispositif d'authentification (100) étant un dispositif d'authentification de carte et comprenant un corps de carte (201), le corps de carte (201) ayant une surface supérieure, une surface latérale et une surface inférieure, le dispositif d'authentification (100) comprenant :
un support (101) pour placer une région cutanée (207) de la personne, la région cutanée (207) pouvant être positionnée sur le support (101) dans une première position et une seconde position ;
un dispositif d'éclairage (103), qui est configuré pour éclairer le support (101) avec une lumière d'éclairage (211) sur un côté arrière afin d'éclairer la région de peau (207) dans la première position et dans la seconde position ;
une caméra d'image (105) pour capturer une première capture d'image de la région cutanée (207) dans la première position sur le support (101) et une seconde capture d'image de la région cutanée (207) dans la seconde position sur le support (101) ; et
un processeur (107), qui est configuré pour authentifier la personne sur la base de la première capture d'image et de la seconde capture d'image ;
dans lequel le support (101) est disposé sur la surface latérale ou un bord du corps de carte (201),
dans lequel le dispositif d'authentification (100) comprend une structure de guidage de lumière (205), qui est configurée pour guider la lumière d'éclairage (213) réfléchie au niveau de la région cutanée (207) vers la caméra d'image (105), dans lequel la structure de guidage de lumière (205) est une cavité dans le corps de carte (201),
**caractérisé en ce que**
le dispositif d'authentification (100) comprend un miroir (203) qui est disposé dans le dispositif d'authentification (100) afin de réfléchir la lumière d'éclairage (213) réfléchie au niveau de la région cutanée (207) vers la caméra d'image (105),
dans lequel le miroir (203) est un bord miroir de la cavité.

2. Dispositif d'authentification (100) selon la revendication 1, dans lequel le dispositif d'éclairage (103), la caméra d'image (105) et le processeur (107) sont intégrés dans le corps de carte, qui est en particulier un corps de carte en plastique.

3. Dispositif d'authentification (100) selon la revendication 1 ou 2, dans lequel le processeur (107) est configuré pour générer une capture d'image conjointe de la région cutanée (207) sur la base de la première capture d'image et de la deuxième capture d'image, et pour authentifier la personne sur la base de la capture d'image conjointe.

4. Dispositif d'authentification (100) selon la revendication 3, dans lequel le processeur (107) est configuré pour détecter une structure de surface de la région cutanée (207), en particulier des détails, dans la capture d'image conjointe et pour authentifier la personne sur la base de la structure de surface.

5. Dispositif d'authentification (100) selon l'une des revendications précédentes, dans lequel la caméra d'image (105) comprend un capteur de ligne, un détecteur à réseau de lentilles ou un détecteur CCD.

6. Dispositif d'authentification (100) selon l'une des revendications précédentes, dans lequel le dispositif d'authentification (100) comprend un ensemble de lentilles (301) qui est disposé entre le support (101) et la caméra d'image (105) afin de focaliser la caméra d'image (105) sur le support (101).

7. Dispositif d'authentification (100) selon l'une des revendications précédentes, dans lequel le support (101) est formé d'une matière plastique partiellement transparente, notamment du polycarbonate.

8. Dispositif d'authentification (100) selon l'une des revendications précédentes, dans lequel le dispositif d'éclairage (103) comprend plusieurs sources lumineuses, notamment des LED proches de l'infrarouge.

9. Dispositif d'authentification (100) selon l'une des revendications précédentes, dans lequel la structure de guidage de lumière (205) est configurée pour guider la lumière d'éclairage réfléchie (213) au moyen d'une réflexion totale perturbée en direction de la caméra d'image (105).

10. Dispositif d'authentification (100) selon l'une des revendications précédentes, dans lequel la cavité (205) est une cavité en forme de coin (205).

11. Dispositif d'authentification (100) selon l'une des revendications précédentes, dans lequel la cavité (205) est remplie d'air ou d'un plastique partiellement transparent, notamment du polycarbonate.

12. Procédé (400) d'authentification d'une personne, comprenant :
placer (401) une région cutanée (207) de la personne sur un support (101), la région cutanée (207) pouvant être positionnée sur le support (101) dans une première position et une seconde position ;
éclairer (403) le support (101) au niveau d'un côté arrière afin d'éclairer la région cutanée (207) dans la première position et dans la deuxième position ;
capturer (405) une première capture d'image de la région cutanée (207) dans la première position sur le support (101) et une seconde capture d'image de la région cutanée (207) dans la seconde position sur le support (101) ; et
authentifier (407) la personne sur la base de la première capture d'image et de la seconde capture d'image,
dans lequel le procédé est réalisé avec un dispositif d'authentification selon l'une des revendications précédentes.
